# EUROPÄISCHE PATENTANMELDUNG

(11) **EP 0 873 915 A2**
(43) Veröffentlichungstag der Anmeldung: **28.10.1998**
(21) Anmeldenummer: 98107014.7
(22) Anmeldetag: 17.04.1998
(51) Int. Cl.: B60R 21/16

(54) **Airbagmodul**

(30) Priorität: 21.04.1997 DE 19716677
(71) Anmelder: BASF AKTIENGESELLSCHAFT, 67056 Ludwigshafen (DE)
(72) Erfinder: Wolfgang, Wilhelm, 67067 Ludwigshafen (DE)
(74) Vertreter: Isenbruck, Günter, Dr.

(57) **Zusammenfassung**

Airbagmodul mit mindestens einem Airbag (1), einem Gehäuse (2) und mindestens einem Gasgenerator (3), wobei der Airbag (1) an mindestens einer Verbindungsstelle mit dem Gehäuse (2) oder dem Gasgenerator (3) stoffschlüssig verbunden ist.

## Beschreibung

Die vorliegende Erfindung bezieht sich auf ein Airbagmodul, insbesondere für Automobile.

Airbags werden heute regelmäßig als komplette Module in entsprechende Aufnahmeeinrichtungen von Automobilen eingebaut, die für den Fahrerairbag im Lenkrad, für den Beifahrerairbag im Bereich des Armaturenbretts und für weitere Airbags, wie Sidebags oder Airbags für die Rücksitzpassagiere, in den Türen oder Sitzen angeordnet sind. Diese Module enthalten den Airbag, einen Gasgenerator und Steuereinheiten, die den Airbag auslösen und seine Funktion im Ernstfall überwachen. Aufprallsensoren sind dagegen regelmäßig außerhalb des Moduls untergebracht, da sie an besonders sensitiven Stellen im Fahrzeug angeordnet werden sollen.

Bei herkömmlichen Airbagmodulen sind die beschriebenen Bauteile in einem Gehäuse aus Metall oder Plastik angeordnet. Der Prallsack liegt, speziell gefaltet, in dem Gehäuse und ist mit Hilfe von Nieten, Schrauben, Nähten oder Klemmen mit dem Gehäuse verbunden. Diese Verbindung des Airbags mit dem Gehäuse bezweckt in erster Linie eine Definition der Lage des Airbags in dem Gehäuse sowohl im Normalbetrieb des Fahrzeugs wie auch bei der Entfaltung. Diese Lagedefinition ist notwendig, denn der Airbag liegt regelmäßig über viele Jahre ungenutzt im Gehäuse, das einer Vielzahl von Bewegungen und Erschütterungen ausgesetzt ist, die zu einer Verschiebung des Prallsacks führen können. Solche Verschiebungen könnten im Einsatzfall die Funktion des Airbags beeinträchtigen, schlimmstenfalls könnte der Airbag während der Entfaltung reißen.

Die oben beschriebenen herkömmlichen Verbindungen zwischen dem Prallesack und dem Gehäuse benötigen relativ viel Platz, denn sie sind allesamt in ihrer Struktur erhaben. Dies ist bei Airbagsystemen in Türen oder Sitzen ebenso wie in Lenkrädern oder Armaturentafeln von Nachteil, denn dort ist der Einbauraum für das Modul sehr beschränkt, so daß auch relativ geringe Raumeinsparangen von erheblicher Bedeutung sind. Ein weiterer Nachteil der herkömmlichen Verbindungen von Airbag und Gehäuse besteht in dem nicht unerheblichen Arbeitsaufwand, der nötig ist, um die Verbindung zu schaffen und zu inspizieren. Schließlich weisen diese Konstruktionen aufgrund der notwendigen, meistens metallischen Verbindungselemente auch ein nicht unerhebliches Gewicht auf.

Aufgabe der vorliegenden Erfindung ist es, ein Airbagmodul bereitzustellen, das eine platzsparende und einfach herzustellende Verbindung von Prallsack und Gehäuse aufweist.

Diese Aufgabe wird durch das erfindungsgemäße Airbagmodul gelöst. Dieses weist mindestens einen Airbag, ein Gehäuse und mindestens einen Gasgenerator auf. Erfindungsgemäß ist dabei der Airbag an mindestens einer Verbindungsstelle mit dem Gehäuse oder dem Gasgenerator stoffschlüssig verbunden.

Eine stoffschlüssige Verbindung bezeichnet in diesem Zusammenhang eine Verbindung, bei der die verbundenen Teile mit oder ohne Vermittlung von weiteren Stoffen, wie etwa von Klebstoffen, eine Verbindung miteinander eingehen. Eine solche Verbindung ist besonders raumsparend, denn sie ist höchstens so dick wie die übereinandergelegten Materiallagen der zu verbindenden Stoffe. Sie kann aber auch noch dünner sein, wenn die zu verbindenden Stoffe zum Beispiel an den Verbindungsstellen verschweißt und gepreßt werden. Herkömmliche Verbindungen sind dagegen sehr viel raumaufwendiger, allein schon aufgrund des Volumens der Verbindungsmittel, wie Nieten, Schrauben, Nähgarne, Klemmen und der für ihre Anwendung notwendigen Verbindungsleisten. Hinzu kommt, daß die zu verbindenden Materialenden bei diesen Verbindungstechniken aufgrund ihrer räumlichen Unterbrochenheit verstärkt werden müssen, um nicht bei Belastung auszureißen. Die herkömmlichen Verbindungsarten führen deshalb im Regelfall zu einem störenden Wulst. Dieser wird bei der vorliegenden Erfindung vermieden oder zumindest doch deutlich reduziert. Ein Airbagmodul nach der vorliegenden Erfindung weist durch die Einfachheit der Verbindung zwischen Airbag und Gehäuse auch ein deutlich geringeres Gewicht auf.

Dies gilt vor allem für die bevorzugten Ausführungsformen des erfindungsgemäßen Airbagmoduls, bei denen die stoffschlüssige Verbindung durch ein Schweißverfahren hergestellt wurde. Eine geeignete Schweißverbindung kann durch die Anwendung eines Heizelements geschaffen werden. Zum Beispiel können die Enden des Airbags mit Hilfe einer Heizplatte auf das Gehäuse gepreßt werden. Dabei können diese Enden völlig miteinander verbunden werden, so däß eine Schweißstelle kaum mehr sichtbar ist. Bei Anwendung genügender Hitze und ausreichenden Drucks kann die Schweißstelle auch völlig oder nahezu plan gemacht werden. Andere Schweißverfahren können aber ebenso angewendet werden, zum Beispiel Ultraschall-, Vibrations-, Rotations- oder Laserschweißverfahren. Die Schweißverfahren sind umso erfolgreicher, je kleiner die Differenz der Schmelzpunkte und je ähnlicher die chemische Struktur der zu verbindenden Materialien ist.

Weitere bevorzugte Verbindungsarten sind Klebeverfahren. Dabei können im Prinzip alle Klebstoffe verwendet werden, die eine hinreichend feste und langzeitstabile Verbindung ermöglichen. Bevorzugt sind Klebeverfahren, die zu einer chemischen Verbindung der zu verbindenden Materialien führen.

Diese Verbindung kann auch dadurch hergestellt werden, däß das Gehäuse durch Umspritzen oder Hinterspritzen des Prallsacks geformt wird. Dabei können der Airbag und das Gehäuse auch wieder aus gleichen oder verschiedenen Materialien bestehen.

Im Rahmen der vorliegenden Erfindung spielt es dabei keine Rolle, an oder mit welchem Teil des Gehäuses der Airbag stoffschlüssig verbunden wird. Der Begriff des Gehäuses umfaßt hier somit alle Teile des Airbagmoduls, an denen der Airbag zur Definierung seiner Lage befestigt werden kann, also vor allem alle Teile, die beim Aufblasen des Airbags in dem Airbagmodul zurückbleiben, ohne ihre Position wesentlich zu verändern. Das Gehäuse schließt deshalb neben allen Teilen des Airbagmodulgehäuses auch alle Anbauteile ein, die an dem eigentlichen Modulgehäuse angebracht sind oder damit in Verbindung stehen. Entsprechend schließt der Begriff des Gasgenerators für vorliegende Zwecke alle Einzelteile dieses Bauteils ein, an denen der Airbag befestigt werden kann, insbesondere das Generatorgehäuse und alle daran angebrachten oder damit in Verbindung stehenden Bauelemente.

Bei einer bevorzugten Ausführungsform des Airbagmoduls besteht der Airbag einerseits und das Gehäuse oder der Gasgenerator andererseits, je nachdem welches Teil mit dem Airbag verbunden ist, mindestens an einer Verbindungsstelle aus einem thermoplastischen Kunststoff. Dadurch kann die Verbindung, insbesondere mit Hilfe von Schweißverfahren, sehr einfach und erfolgreich durchgeführt werden. Der Airbag und das Gehäuse oder der Gasgenerator können aber auch vollständig aus diesen Materialien bestehen, also nicht lediglich an den Verbindungsstellen. Dies kann sowohl hinsichtlich der Fertigung, wie auch bezüglich des Recycling von Vorteil sein.

Bei einer weiteren bevorzugten Ausführungsform des erfindungsgemäßen Airbagmoduls besteht der Airbag einerseits und das Gehäuse oder der Gasgenerator andererseits, je nachdem wiederum welches Teil mit dem Prallsack verbunden ist, mindestens an einer Verbindungsstelle aus einem modifizierten oder unmodifizierten Polyamid 6 oder aus einem modifizierten oder unmodifizierten Polyamid 66. Auch hier ist es vorteilhaft, wenn zum Beispiel der gesamte Prallsack aus Polyamid 6 und das gesamte Gehäuse aus Polyamid 6 oder 66 besteht, also die Materialgleichheit oder Materialähnlichkeit nicht nur an den Verbindungsstellen besteht. Das Polyamid kann, vor allem für das Gehäuse, glasfaserverstärkt oder zähmodifiziert sein. Als Materialien kommen aber auch thermoplastische Polyester, Polyacetale oder andere geeignete Thermoplasten in Betracht.

Im Rahmen der vorliegenden Erfindung bevorzugt ist ein Airbagmodul, bei dem der Airbag und das Gehäuse einstückig aus dem gleichen Material hergestellt sind. Das bringt den erheblichen Vorteil, daß ein großer Teil des Moduls in einem Arbeitsgang hergestellt werden kann, so daß insbesondere der Arbeitsgang des Verbindens des Airbags mit dem Gehäuse entfällt. Bei einer besonders bevorzugten Ausführung der Erfindung sind dabei der Airbag und das Gehäuse blasextrudiert.

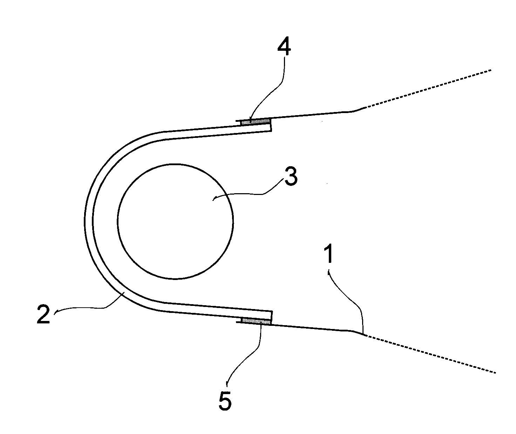

Die Erfindung wird im Folgenden an Hand der Zeichnung beschrieben. Diese zeigt eine schematische Darstellung eines erfindungsgemäßen Airbagmoduls.

Bei der in der Zeichnung dargestellten Ausführungsform ist ein Prallsack 1 an zwei Verbindungsstellen 4,5 mit einem Gehäuse 2 stoffschlüssig, zum Beispiel durch Verschweißen, verbunden. Die Verbindungsstellen 4,5 sind in der Zeichnung für die Zwecke besserer Erkennbarkeit erhaben dargestellt. In der Realität wären die Verbindungsstellen 4,5 aber plan oder nahezu plan, so daß die erfindungsgemäß angestrebte Platzersparnis erreicht wird. In Gehäuse 2 ist ein Gasgenerator 3 angeordnet, der den Prallsack 1 im Einsatzfall innerhalb von Millisekunden aufbläst. Der Prallsack 1 könnte genausogut an diesem Gasgenerator 3 angeordnet sein, wenn die Konstruktion des Moduls dies im Einzelfall vorteilhafter erscheinen läßt. Das Airbagmodul enthält weitere Komponenten, die in der Zeichnung nicht gezeigt sind.

Die vorliegende Erfindung stellt somit ein Airbagmodul bereit, das eine einfache, langzeitstabile und platzsparende Montage des Airbags in dem Airbagmodul aufweist.

## Patentansprüche

1. Airbagmodul mit mindestens einem Airbag (1), einem Gehäuse (2) und mindestens einem Gasgenerator (3), **dadurch gekennzeichnet, daß** der Airbag (1) an mindestens einer Verbindungsstelle (4,5) mit dem Gehäuse (2) oder dem Gasgenerator (3) stoffschlüssig verbunden ist.

2. Airbagmodul nach Anspruch 1, dadurch gekennzeichnet, daß die stoffschlüssige Verbindung durch ein Schweißverfahren hergestellt wurde.

3. Airbagmodul nach Anspruch 1, dadurch gekennzeichnet, däß die stoffschlüssige Verbindung durch ein Klebeverfahren hergestellt wurde.

4. Airbagmodul nach einem der vorhergehenden Ansprüche, dadurch gekennzeichnet, daß der Airbag (1) einerseits und das Gehäuse (2) oder der Gasgenerator (3) andererseits mindestens an einer Verbindungsstelle (4,5) aus einem thermoplastischen Kunststoff besteht.

5. Airbagmodul nach einem der vorhergehenden Ansprüche, dadurch gekennzeichnet, daß der Airbag (1) einerseits und das Gehäuse (2) oder der Gasgenerator (3) andererseits mindestens an einer Verbindungsstelle (4,5) aus einem modifizierten oder unmodifizierten Polyamid 6 oder aus einem modifizierten oder unmodifizierten Polyamid 66 besteht.

6. Airbagmodul nach einem der vorhergehenden Ansprüche, dadurch gekennzeichnet, daß der Airbag (1) und das Gehäuse (2) einstückig aus dem gleichen Material hergestellt sind.

7. Airbagmodul nach Anspruch 6, dadurch gekennzeichnet, daß der Airbag (1) und das Gehäuse (2) blasextrudiert sind.
